# DEMANDE DE BREVET EUROPEEN

(11) **EP 3 496 022 A1**
(43) Date de publication de la demande: **12.06.2019**
(21) Numéro de dépôt: 18210596.5
(22) Date de dépôt: 05.12.2018
(51) Int. Cl.: G06Q 20/32, G06Q 20/38, G06Q 20/40, G06Q 20/42

(54) **PROCÉDÉ DE SÉCURISATION D'UNE TRANSACTION ÉLECTRONIQUE**

(30) Priorité: 08.12.2017 FR 1761869
(71) Demandeur: Idemia Identity & Security France, 92400 Courbevoie (FR)
(72) Inventeur: BRINGER, Julien, 92400 COURBEVOIE (FR); DURAND, Claire, 92100 COURBEVOIE (FR)
(74) Mandataire: Lavialle, Bruno François Stéphane

(57) **Abrégé**

Procédé de sécurisation d'une transaction effectuée par un utilisateur disposant d'une unité informatique reliée à un serveur informatique par un réseau informatique, l'utilisateur ayant un terminal de télécommunication agencé pour accéder à un réseau téléphonique. Le procédé comprend une étape préalable d'enregistrer dans le terminal un paramètre de synchronisation qui est partagé avec le serveur et qui évolue de manière synchronisée dans le terminal et le serveur. Lorsque le terminal ne peut être raccordé au réseau téléphonique, l'authentification est réalisée à partir d'un code temporaire calculé par le terminal sur la base du paramètre de synchronisation et d'un code personnel de l'utilisateur.

## Description

La présente invention concerne le domaine des transactions réalisées entre un serveur et un ordinateur relié au serveur via un réseau tel que le réseau Internet.

### ETAT DE LA TECHNIQUE

Il est connu de réaliser des transactions commerciales entre un serveur commercial et un ordinateur relié au serveur commercial via le réseau Internet. Ces transactions comprennent souvent une opération financière comme une autorisation de débit d'un compte bancaire ou un paiement validé par la saisie de données d'une carte bancaire. Le serveur commercial est généralement en relation avec un serveur bancaire qui va enregistrer ladite opération financière.

La difficulté d'une telle transaction commerciale à distance est de s'assurer que l'utilisateur qui effectue la transaction commerciale et demande le paiement est bien une personne autorisée à utiliser les moyens de paiement en question et non pas, par exemple, une personne ayant trouvé, ou subtilisé à son propriétaire, une carte bancaire.

Pour ce faire, le moyen le plus connu est de fournir un code personnel à l'utilisateur de telle manière que l'utilisateur puisse s'authentifier en saisissant son code personnel sur une page web que lui présente le serveur bancaire.

Toutefois, si le code personnel est intercepté par un tiers, ce tiers peut le réutiliser pour effectuer frauduleusement des transactions.

Pour éviter que le code personnel ne doive transiter en clair sur le réseau Internet, il est connu de recourir à un code à usage unique (couramment appelé OTP de l'anglais « one-time password ») envoyé par l'organisme bancaire à l'utilisateur par une autre voie, généralement sur un terminal mobile raccordé au réseau téléphonique cellulaire (ou GSM). L'utilisateur doit alors saisir le code à usage unique dans un champ dédié affiché sur son ordinateur. Ceci suppose toutefois de pouvoir être raccordé au réseau GSM.

### OBJET DE L'INVENTION

Un but de l'invention est de fournir un moyen pour sécuriser les transactions comportant une authentification via un réseau auquel l'utilisateur n'a pas temporairement accès.

### BREF EXPOSE DE L'INVENTION

A cet effet, on prévoit, selon l'invention, un procédé de sécurisation d'une transaction effectuée par un utilisateur disposant d'une unité informatique reliée à un serveur informatique par un premier réseau, l'utilisateur ayant un terminal de télécommunication agencé pour accéder à un deuxième réseau. Le procédé comprend une étape préalable d'enregistrer dans le terminal un paramètre de synchronisation qui est partagé avec le serveur et qui évolue de manière synchronisée dans le terminal et le serveur et, lorsque le terminal ne peut être raccordé au deuxième réseau, est initiée une phase d'authentification alternative comportant les étapes de :
- demander à l'utilisateur de saisir dans l'unité informatique un code temporaire calculé par le terminal sur la base du paramètre de synchronisation et d'un code personnel de l'utilisateur ;
- le transmettre au serveur pour que le serveur le compare à un code temporaire calculé par le serveur à partir du paramètre de synchronisation et d'un vérificateur correspondant au code personnel de l'utilisateur, l'authentification étant validée si le code calculé correspond au code reçu.

Par exemple, le premier réseau est un réseau informatique tel que le réseau Internet ; le deuxième réseau est un réseau indépendant du premier comme le réseau téléphonique ; l'unité informatique est un ordinateur ; le terminal est un téléphone mobile de type ordiphone (ou plus couramment appelé smartphone).

Le procédé de l'invention permet donc à l'utilisateur de s'authentifier avec son code personnel qui ne sera pas transmis sur un réseau en tant que tel mais sert à former le code temporaire. L'authentification est donc réalisée à partir de deux facteurs que sont le code personnel et le paramètre de synchronisation, le paramètre de synchronisation incorporant ou pas une clé partagée. La validité du code personnel n'a donc pas besoin d'être vérifiée par le terminal puisqu'elle sera vérifiée indirectement lors de la vérification du code temporaire par le serveur.

D'autres caractéristiques et avantages de l'invention ressortiront à la lecture de la description qui suit de modes de mise en oeuvre particuliers non limitatifs de l'invention.

### BREVE DESCRIPTION DES FIGURES

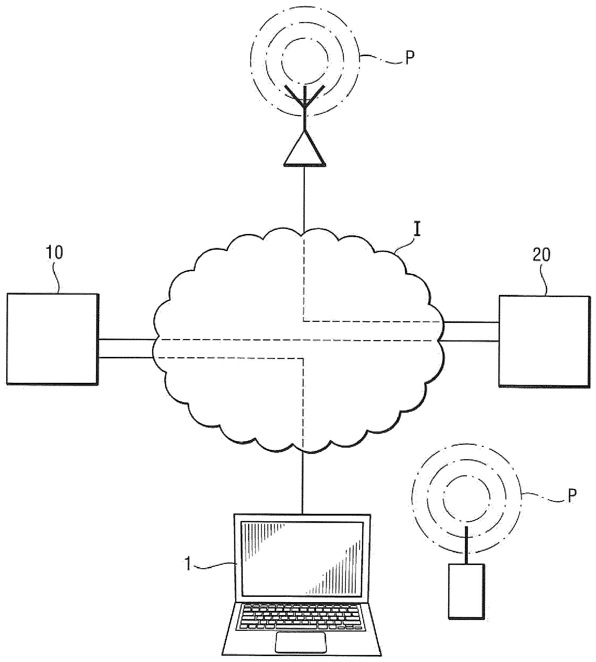

Il sera fait référence à la figure unique annexée représentant schématiquement l'architecture globale d'un système utilisable pour la mise en oeuvre de l'invention.

### DESCRIPTION DETAILLEE DE L'INVENTION

En référence à la figure, le procédé selon l'invention autorise la réalisation de transactions, par exemple commerciales ou financières, entre un ordinateur 1 d'un utilisateur et un serveur de transaction 10 d'un commerçant ou d'un organisme bancaire. L'ordinateur 1 et le serveur 10 sont reliés à un réseau informatique, ici le réseau Internet I.

Le serveur de transaction 10 est programmé de façon connue en soi pour permettre à l'ordinateur 1 se connectant au serveur de transaction 10 via le réseau Internet I de réaliser une transaction commerciale comme l'achat d'un produit ou une transaction financière comme la réalisation d'un virement bancaire. L'invention ne concerne pas la transaction en elle-même mais la sécurisation de la transaction.

Cette sécurisation repose sur une authentification de l'utilisateur qui permet au serveur de transaction 10 de s'assurer que la personne demandant la transaction est bien un utilisateur disposant du droit de réaliser cette transaction.

En vue de la réalisation de l'authentification, le serveur de transaction 10 est agencé pour se connecter à un serveur d'authentification 20 relié au réseau Internet I. Le serveur d'authentification 20 est pourvu des moyens de sa connexion à un réseau cellulaire P faisant partie du réseau téléphonique. Le réseau cellulaire P est par exemple de type GSM.

L'utilisateur dispose également d'un terminal de télécommunication, ici un téléphone 30 de type ordiphone, qui est agencé pour accéder au réseau téléphonique P.

L'ordinateur 1, le serveur de transaction 10, le serveur d'authentification 20 et le téléphone 30 comprennent des processeurs et des mémoires pour pouvoir exécuter des programmes informatiques comprenant des instructions permettant la mise en oeuvre du procédé selon l'invention.

A un moment de la transaction, l'utilisateur est amené par le serveur de transaction 10 à donner son accord pour un transfert d'argent. Pour ce faire, le serveur de transaction 10 affiche sur l'ordinateur 1 une page web dédiée dans laquelle l'utilisateur doit saisir :
- soit, dans le cadre d'une transaction commerciale, des informations de sa carte bancaire (comme le nom de l'utilisateur, le numéro de la carte bancaire, la date de fin de validité et un cryptogramme) ;
- soit, dans le cadre d'une transaction financière, un numéro de compte et un code associé.

Le serveur de transaction 10 est ensuite programmé pour afficher sur l'ordinateur 1 une page web demandant à l'utilisateur de :
- saisir un code temporaire qui va lui être transmis sur son téléphone 30 (phase d'authentification nominale) ; ou
- sélectionner une phase d'authentification alternative.

La phase d'authentification nominale repose sur l'envoi, par le serveur d'authentification 20 au téléphone 30 via le réseau cellulaire P, d'un code temporaire que l'utilisateur doit saisir dans l'ordinateur l pour s'authentifier auprès du serveur d'authentification 20. On appellera code temporaire nominal le code temporaire utilisé lors de la phase d'authentification nominale.

La phase d'authentification se déroule comme suit :
- le téléphone 30 envoie, via le réseau cellulaire P, une requête pour obtenir un code temporaire nominal au serveur d'authentification 20 ;
- le serveur d'authentification 20 initie alors une procédure d'authentification en mode connecté de l'utilisateur en interagissant, via le réseau cellulaire P, avec le terminal (ce qui inclut la demande à l'utilisateur de saisir son code personnel sur le téléphone 30 afin que le code soit validé par le serveur d'authentification 20) ;
- une fois l'utilisateur authentifié, le serveur d'authentification 20 transmet le code temporaire nominal au téléphone 30, et l'utilisateur le saisit sur la page web.

L'ordinateur 1 transmet alors le code temporaire nominal au serveur de transaction 10 qui le transmet au serveur d'authentification 20. Le serveur d'authentification 20 compare le code temporaire nominal qu'il vient de recevoir au code temporaire nominal qu'il a envoyé. Le serveur d'authentification 20 valide l'authentification si les codes temporaires nominaux correspondent l'un à l'autre et en informe le serveur de transaction 10 qui achève alors la transaction. Si les codes temporaires nominaux ne correspondent pas, le serveur d'authentification 20 invalide l'authentification et en informe le serveur de transaction 10 qui interrompt alors la transaction en affichant un message d'erreur sur l'ordinateur 1.

On notera qu'une connexion est initiée entre le serveur de transaction 10 et l'ordinateur 1 et une connexion est initiée entre le serveur de transaction 10 et le serveur d'authentification 20 via le réseau Internet I. Le serveur d'authentification 20 n'est connecté côté utilisateur qu'au téléphone 30 par le réseau cellulaire P.

S'il le souhaite ou si le téléphone 30 n'est pas en mesure d'accéder au réseau cellulaire P, l'utilisateur peut sélectionner la phase d'authentification alternative.

Le serveur de transaction 10 affiche alors sur l'ordinateur 1 une page web demandant la saisie d'un code temporaire qu'on appellera ici code temporaire alternatif.

Pour que la phase d'authentification alternative puisse être réalisable, sont enregistrés dans la mémoire du téléphone 30 :
- un code personnel,
- une formule de vérification pour calculer un vérificateur à partir du code personnel,
- un paramètre de synchronisation, et
- une formule mathématique prédéterminée pour calculer le code temporaire alternatif.

Sont enregistrés dans la mémoire du serveur d'authentification 20, pour chaque utilisateur enregistré :
- le vérificateur ;
- un paramètre de synchronisation ;
- la formule mathématique prédéterminée pour calculer le code temporaire alternatif.

Les algorithmes d'authentification utilisables sont par exemple les algorithmes HOTP (de l'anglais « HMAC-based one-time Password »), TOTP (de l'anglais « Time-based One-Time Password »), OCRA (de l'anglais « OATH Challenge-Response Algorithm »)... Le vérificateur est par exemple calculé comme dans les protocoles SRP (de l'anglais « Secure Remote Password »), VPAKE (de l'anglais « Verifier-Based Password Authenticated Key Exchange »), ou en effectuant un hachage à partir d'un nombre aléatoire (ou « salt »). On notera que dans l'invention ces algorithmes ne sont pas appliqués à une clé seule, comme c'est le cas habituellement, mais au mélange du code personnel et du paramètre de synchronisation. Un exemple de calcul sera donné plus loin en utilisant un algorithme HOTP ou TOTP.

Le téléphone 30 et le serveur d'authentification 20 exécutent tous deux un programme d'authentification alternative qui est agencé pour faire évoluer le paramètre de synchronisation et pour calculer un code temporaire à partir du paramètre de synchronisation. Le paramètre de synchronisation doit évoluer de manière synchronisée dans le téléphone 30 et le serveur d'authentification 20. Pour ce faire, la règle d'évolution est connue par le téléphone 30 et le serveur d'authentification 20. Dans un premier mode de mise en oeuvre, le paramètre de synchronisation est une donnée d'horodatage : cette donnée est déjà employée par le téléphone 30 et le serveur d'authentification 20 pour d'autres usages comme l'affichage de la date et de l'heure, les connexions au réseau Internet I... Cette donnée d'horodatage évolue naturellement avec le temps qui passe. Dans un deuxième mode de mise en oeuvre, le paramètre de synchronisation est égal à la somme du nombre d'authentifications alternatives réussies et d'une valeur initiale d'incrémentation. A titre d'exemple, la valeur initiale d'incrémentation est égale à 5 et le paramètre de synchronisation est donc égal au nombre d'authentifications alternatives réussies augmenté de 5. Le paramètre de synchronisation est ainsi augmenté d'une valeur prédéterminée à chaque phase réussie d'authentification alternative. Le paramètre de synchronisation peut également comprendre une clé secrète, partagée entre le serveur et le terminal, combinée par une formule mathématique avec la donnée d'horodatage ou la somme du nombre d'authentifications alternatives réussies et d'une valeur initiale d'incrémentation.

Pour calculer le code temporaire alternatif, l'utilisateur exécute alors sur son téléphone 30 le programme d'authentification alternative. Ce programme demande à l'utilisateur de saisir un code personnel, récupère ou calcule le paramètre de synchronisation, puis calcule le code temporaire alternatif sur la base du paramètre de synchronisation et du code personnel de l'utilisateur. Le calcul du code temporaire alternatif par le téléphone 30 comprend ici plus précisément l'étape de calculer le vérificateur en appliquant la formule de vérification au code personnel puis d'appliquer la formule mathématique prédéterminée au vérificateur et au paramètre de synchronisation pour obtenir le code temporaire alternatif.

L'utilisateur saisit le code temporaire alternatif sur l'ordinateur 1 qui le transmet au serveur de transaction 10. Le serveur de transaction 10 transmet alors le code temporaire alternatif au serveur d'authentification 20 qui le compare à un code temporaire alternatif calculé par le serveur d'authentification 20 à partir du paramètre de synchronisation et du vérificateur correspondant au code personnel de l'utilisateur. Le calcul du code temporaire alternatif par le serveur d'authentification 20 comprend l'étape d'appliquer la formule mathématique prédéterminée au vérificateur et au paramètre de synchronisation pour obtenir le code temporaire alternatif. L'authentification est validée si le code temporaire alternatif calculé correspond au code temporaire alternatif reçu. Si les codes temporaires alternatifs ne correspondent pas, le serveur d'authentification 20 invalide l'authentification et en informe le serveur de transaction 10 qui interrompt alors la transaction en affichant un message d'erreur sur l'ordinateur 1.

Un exemple de mise en oeuvre utilisant l'algorithme HOTP ou TOTP va maintenant être décrit.

Il est procédé à l'échange préalable d'une clé partagée K entre le terminal et le serveur qui stockent tous deux la clé K, et une valeur de synchronisation sync est synchronisée entre le terminal et le serveur. Dans le serveur est également stocké un vérificateur v. Le vérificateur v a été obtenu par un calcul selon une formule prédéterminée appliquée au code personnel de l'utilisateur qui n'est pas, lui, stocké dans le serveur.

La phase d'authentification se déroule comme suit :
- l'utilisateur saisit son code personnel sur son terminal lequel calcule successivement : un vérificateur vPIN du code personnel, une clé dérivée K' en combinant K et vPIN (par exemple K'=H(K,vPIN)); puis génère le code temporaire alternatif OTP à partir d'une fonction mathématique F telle que OTP=F(K', sync) ;
- le code temporaire alternatif est ensuite saisi sur l'ordinateur et envoyé au serveur ;
- le serveur calcule une clé dérivée K" à partir de la clé K et du vérificateur v, puis vérifie que le code temporaire OTP reçu est tel que OTP=(K", sync) ;
- si le code temporaire est jugé valide, alors les clés K" et K' sont identiques avec une forte probabilité et donc v=vPIN. L'authentification est donc positive.

Dans le premier mode de réalisation utilisant un paramètre de synchronisation basée sur une donnée d'horodatage, le serveur d'authentification applique une marge d'erreur tenant compte d'une durée d'acheminement du code temporaire alternatif depuis l'ordinateur 1 jusqu'au serveur d'authentification 20. Le serveur d'authentification 20 calcule autant de codes temporaires alternatifs que de codes temporaires possibles compte tenu de la marge d'erreur, et compare le code temporaire alternatif reçu avec chacun des codes temporaires alternatifs calculés : l'authentification est validée si l'un des codes temporaires alternatifs correspond au code temporaire alternatif reçu. La marge d'erreur est par exemple ici d'une minute et soixante codes temporaires alternatifs sont calculés.

Dans le deuxième mode de réalisation, il est prévu une marge d'erreur de tentatives d'authentification alternatives, cette marge d'erreur étant par exemple de cinq tentatives d'authentification alternatives. Le serveur d'authentification 20 calcule cinq codes temporaires alternatifs correspondant à la marge d'erreur, et compare le code temporaire alternatif reçu avec chacun des codes temporaires alternatifs calculés : l'authentification est validée si l'un des codes temporaires alternatifs correspond au code temporaire alternatif reçu.

De préférence, le procédé comprend l'étape de réactualiser le paramètre de synchronisation dans le téléphone 30 et le serveur d'authentification 20 lorsqu'un accès au réseau cellulaire P est à nouveau possible pour le téléphone 30 ou lorsqu'une authentification a été validée.

Par ailleurs, il est possible d'utiliser pour le transfert du code temporaire alternatif tout mode d'échange de codes et/ou tout procédé cryptographique. Par exemple, il est possible d'utiliser un protocole de transmission serveur à serveur par exemple HTTPS, SSL ou TLS.

Selon une variante de l'invention, un aléa est affiché sur l'ordinateur 1 et l'utilisateur le saisit sur son téléphone 30 dont le programme d'authentification utilise l'aléa pour calculer le code temporaire alternatif. En variante, la saisie n'est pas nécessaire car l'aléa est scanné par le téléphone. L'aléa a par exemple la forme d'un QR code qui est scanné au moyen de la caméra du téléphone. On pourrait aussi avoir une communication réseau locale entre le terminal et le serveur (pour cette étape, comme pour la « saisie » du code temporaire sur la page web...).

Le serveur d'authentification utilise également l'aléa pour calculer le code temporaire alternatif.

On notera que d'autres modes d'authentification nominale sont envisageables. De préférence, on choisira un mode d'authentification n'obligeant pas à transmettre le code personnel au serveur. A cette fin, on privilégiera par exemple l'utilisation d'un vérificateur.

Ainsi, il est possible lors de l'authentification nominale de se passer de l'envoi d'un code temporaire. On pourra alors directement mettre en oeuvre une authentification de l'utilisateur à partir de son code personnel et du vérificateur associé côté serveur d'authentification tel que cela est mis en oeuvre dans les protocoles SRP (de l'anglais « Secure Remote Password ») ou VPAKE (de l'anglais « Verifier-Based Password Authenticated Key Exchange »), ou via un vérificateur calculé par hachage à partir d'un nombre aléatoire (ou « salt »).

Un tel mode d'authentification nominale pourrait être le suivant :
1. l'utilisateur entre un identifiant sur le serveur de transaction ;
2. le serveur de transaction envoie une requête d'authentification de cet identifiant au serveur d'authentification ;
3. le serveur d'authentification initie alors une procédure d'authentification en mode connecté de l'utilisateur en interagissant avec le terminal (ce qui inclut la demande à l'utilisateur de saisir son code personnel sur le terminal afin que le code soit validé par le serveur d'authentification en utilisant par exemple l'un des protocoles mentionnés ci-dessus) ;
4. une fois l'utilisateur authentifié, le serveur d'authentification transmet le résultat positif au serveur de transaction qui peut alors déverrouiller l'accès.

Bien entendu, l'invention n'est pas limitée aux modes de réalisation décrits mais englobe toute variante entrant dans le champ de l'invention telle que définie par les revendications.

En particulier, le terminal de télécommunication peut être incorporé à l'unité informatique.

L'unité informatique peut être un ordinateur, un deuxième serveur, ou une tablette multimédia.

L'unité informatique peut être reliée au réseau informatique par une liaison filaire ou non.

Le code personnel peut être une suite de caractères alphanumériques directement saisis par l'utilisateur ou élaborées à partir du codage d'un motif réalisé par l'utilisateur sur une dalle tactile du terminal ou un codage de caractéristiques biométriques détectées par un capteur biométrique du terminal.

La phase d'authentification nominale peut débuter directement par l'étape de faire envoyer, par le serveur d'authentification 20, le code temporaire nominal au téléphone 30 via le réseau cellulaire P de telle manière que l'utilisateur puisse saisir dans la page web affichée sur l'ordinateur 1 le code temporaire nominal reçu par le téléphone 30.

Le procédé peut être mise en oeuvre au moyen d'un unique serveur assurant à la fois l'authentification et la transaction.

Le code temporaire peut être lié au contexte de la transaction : au moins une information relative à la transaction (par exemple le type ou le montant) peut être combinée au code personnel et au paramètre de synchronisation pour calculer le code temporaire.

## Revendications

1. Procédé de sécurisation d'une transaction effectuée par un utilisateur disposant d'une unité informatique reliée à un serveur informatique par un premier réseau, l'utilisateur ayant un terminal de télécommunication agencé pour accéder à un deuxième réseau, le procédé étant **caractérisé en ce qu'**il comprend une étape préalable d'enregistrer dans le terminal un paramètre de synchronisation qui est partagé avec le serveur et qui évolue de manière synchronisée dans le terminal et le serveur, et **en ce que**, lorsque le terminal ne peut être raccordé au deuxième réseau, le procédé entre dans une phase d'authentification alternative comportant les étapes de :
- faire transmettre au serveur par l'unité informatique un code temporaire calculé par le terminal sur la base du paramètre de synchronisation et d'un code personnel de l'utilisateur ;
- faire comparer par le serveur le code reçu à un code calculé par le serveur à partir du paramètre de synchronisation et d'un vérificateur correspondant au code personnel de l'utilisateur, l'authentification étant validée si le code calculé correspond au code reçu.

2. Procédé selon la revendication 1, dans lequel le paramètre de synchronisation dépend d'une donnée d'horodatage.

3. Procédé selon la revendication 2, dans lequel lors de l'authentification, le serveur applique une marge d'erreur tenant compte d'une durée d'acheminement du code temporaire.

4. Procédé selon la revendication 3, dans lequel le serveur calcule autant de codes temporaires que de codes temporaires possibles compte tenu de la marge d'erreur, et compare le code temporaire reçu avec chacun des codes temporaires calculés.

5. Procédé selon la revendication 1, dans lequel le paramètre de synchronisation évolue avec le nombre de phases d'authentification alternative réalisées.

6. Procédé selon la revendication 5, dans lequel le paramètre de synchronisation est augmenté d'une valeur prédéterminée à chaque phase d'authentification alternative.

7. Procédé selon l'une quelconque des revendications précédentes, dans lequel un aléa est affiché sur l'ordinateur et est communiqué au terminal qui utilise l'aléa pour calculer le code temporaire, le serveur utilisant également l'aléa pour calculer le code temporaire.

8. Procédé selon l'une quelconque des revendications précédentes, comprenant une phase d'authentification nominale comportant les étapes de :
- l'utilisateur entre un identifiant sur le serveur, dit serveur de transaction ;
- le serveur de transaction envoie une requête d'authentification de cet identifiant à un deuxième serveur, dit serveur d'authentification ;
- le serveur d'authentification initie alors une procédure d'authentification de l'utilisateur comprenant une demande à l'utilisateur de saisir son code personnel sur le terminal afin que le code soit validé par le serveur d'authentification ;
- une fois l'utilisateur authentifié, le serveur d'authentification transmet le résultat positif au serveur de transaction qui peut alors déverrouiller l'accès de l'utilisateur au serveur de transaction.

9. Procédé selon la revendication 8, dans lequel le code personnel est vérifié en utilisant un vérificateur sur le serveur d'authentification.

10. Procédé selon l'une des revendications 1 à 7, comprenant une phase d'authentification nominale comportant les étapes de :
- faire envoyer un code temporaire nominal par le serveur au terminal via le deuxième réseau ;
- demander à l'utilisateur de saisir dans l'unité informatique le code temporaire nominal reçu par le terminal ;
- le transmettre au serveur pour que le serveur le compare au code temporaire nominal envoyé et qu'il valide l'authentification si les codes temporaires nominaux correspondent.

11. Procédé selon l'une quelconque des revendications 1 à 7 et 10, comprenant une phase d'authentification nominale comportant les étapes de :
- le terminal (30) envoie, via le réseau cellulaire (P), une requête pour obtenir un code temporaire nominal au serveur d'authentification (20) ;
- le serveur d'authentification (20) initie alors une procédure d'authentification en mode connecté de l'utilisateur en interagissant, via le réseau cellulaire (P), avec le terminal (30), l'authentification en mode connecté comprenant la demande à l'utilisateur de saisir son code personnel sur le terminal (30) afin que le code temporaire nominal soit déverrouillé par le serveur d'authentification (20) ;
- une fois l'utilisateur authentifié, le serveur d'authentification (20) transmet le code temporaire nominal au terminal (30) ;
- le transmettre au serveur pour que le serveur le compare au code temporaire nominal envoyé et qu'il valide l'authentification si les codes temporaires nominaux correspondent.

12. Procédé selon la revendication 10 ou 11, dans lequel l'envoi du code temporaire est précédé par l'étape de permettre à l'utilisateur d'initier une phase d'authentification alternative s'il le souhaite.

13. Procédé selon l'une des revendications 8 à 12, comprenant l'étape de réactualiser le paramètre de synchronisation lorsqu'un accès au deuxième réseau est disponible.

14. Procédé selon l'une quelconque des revendications précédentes, dans lequel, lors de la phase d'authentification alternative, le calcul du code temporaire par le terminal comprend l'étape de calculer le vérificateur à partir du code personnel puis d'appliquer une formule mathématique prédéterminée au vérificateur et au paramètre de synchronisation et le calcul du code temporaire par le serveur comprend l'étape d'appliquer la formule mathématique prédéterminée au vérificateur et au paramètre de synchronisation.

15. Procédé selon la revendication 14, dans lequel la phase d'authentification alternative met en oeuvre l'un des algorithmes d'authentification suivant :
- HOTP ;
- TOTP ;
- OCRA...

16. Procédé selon la revendication 14 ou la revendication 15, dans lequel le vérificateur est calculé de la même manière que dans les protocoles suivant :
- SRP ;
- VPAKE ;
- hachage à partir d'un nombre aléatoire.

17. Procédé selon l'une quelconque des revendications précédentes, mis en oeuvre au moyen d'un serveur d'authentification relié à un serveur de transaction relié à l'unité informatique, le procédé comprenant l'étape d'initier une connexion entre le serveur de transaction et l'unité informatique et une connexion entre le serveur de transaction et le serveur d'authentification, le serveur d'authentification n'étant connecté côté utilisateur qu'au terminal par le deuxième réseau.
